# EUROPEAN PATENT APPLICATION

(11) **EP 2 658 321 A1**
(43) Date of publication of application: **30.10.2013**
(21) Application number: 12305478.5
(22) Date of filing: 27.04.2012
(51) Int. Cl.: H04W 52/02, H04B 5/00, H04M 1/725, G06K 19/07

(54) **Power consumption reduction method in NFC device**

(71) Applicant: ST-Ericsson SA, 1228 Plan-les-Ouates (CH)
(72) Inventor: Gimeno Monge, Pablo Ignacio, 06000 Nice (FR)
(74) Representative: Hirsch & Associés

(57) **Abstract**

The embodiments concern a power consumption reduction method in a Near Field Communication device, comprising having (S1) a first Near Field Communication function, of said Near Field Communication device, which idle mode is disabled to reduce power consumption when said Near Field Communication device (1) is on, detecting (S2) a likelihood of a future need of activation of said first Near Field Communication function which idle mode is disabled, when said likelihood is detected, automatically enabling (S3) said disabled idle mode of said first Near Field Communication function, before actual need of activation of said first Near Field Communication function.

## Description

### TECHNICAL FIELD

The invention relates to power consumption reduction methods in Near Field Communication devices, and to Near Field Communication devices using such power consumption reduction methods.

### BACKGROUND

Near Field Communication (NFC) devices are integrated in next generation mobile phones. NFC is preferably a short range radio technology based on the inductive coupling of two loop antennae resonating at 13.56 MHz. Typical data rates are in the range of 100 to 400 kbps, and communication distance is in the range of several centimetres. NFC can encompass other short range communication processes using near field communication.

Deployment of NFC applications relies on easy access to the NFC function, which idle mode is permanently enabled to ease user experience. Idle mode power consumption is much lower than activated mode power consumption. Idle mode power consumption is still not null.

In some first generation NFC systems, idle mode consumption is proportional to the number of NFC technologies that the device is sensitive to. In some second generation NFC systems, idle power consumption can be optimized by restricting full device discovery to the satisfaction of some predetermined conditions in the devices' neighbourhood. In both preceding cases, the system is periodically monitoring NFC activity, and the idle power consumption is a function of the duty cycle and the associated power levels. Idle mode reduces drastically power consumption compared to activated mode, but idle mode power consumption is still notably higher than a completely off mode.

In a prior art, for example described in WO 2006/040651, it is described a power consumption reduction method which, upon detection of an actual need of activation of a short range communication module, goes from a low power consumption mode, for example sleep or idle mode, to a fully activated mode being a high power consumption mode. This prior art shows at least two drawbacks. First, only the periods of activation are reduced, not the periods of idle mode which still consume power even if notably less than activated mode. Second, the mode changing is only performed when an actual need of activation has been identified; there is indeed no anticipation.

### SUMMARY

An object of the embodiments is to alleviate at least partly the above mentioned drawbacks.

More particularly, the embodiments aim, for at least a given NFC function, to switch between disabled idle mode, where there is no power consumption or practically no power consumption, and enabled idle mode, where there is some non negligible power consumption even if it is reduced power consumption compared to an activated mode. Preferably, activation will only be performed when actual need of activation has been identified.

When no actual need of activation has been identified, or before any actual need of activation, if the NFC function always stays in an idle mode, there will still be some power consumption in excess, a reduced excess power consumption but a non negligible excess power consumption according to embodiments.

When no actual need of activation has been identified, or before any actual need of activation, if the NFC function always disables even the idle mode, there will be practically no more power consumption in excess, but the reactivity of the NFC function will be low, since even the idle mode being disabled, the NFC function will have to change towards a full activation mode, starting from a kind of completely off mode and not from an intermediate mode like an idle mode which allows for quick reactivity while reducing power consumption.

Hence, the power consumption reduction method according to embodiments will make the NFC function stay in a disabled idle mode, with practically no power consumption and with low reactivity to be used, when there is no likelihood of a future need of activation. It will make the NFC function go into an enabled idle mode, with a higher but limited power consumption and with higher reactivity to be used, when there is a likelihood of a future need of activation. It will make the NFC function go into an activated mode, where this NFC function can work and be used, with full power consumption and ready for use, when there is an actual need of activation.

According to embodiments, the method drastically reduces the power consumption of the NFC function, by reducing the power consumption in idle mode, by automatically disabling / enabling idle mode of an NFC function based on well determined user actions, which can be detected through the sensors preferably embedded in the mobile phone system.

The NFC function in terms of ability to engage in Peer to Peer or Tag Read/Write is the dominant contributor to idle power consumption. In state of the art systems, the capability to engage in active applications like Peer to Peer or Tag Read/Write is permanently enabled by staying permanently in idle mode for corresponding functions, whenever the NFC device is on.

According to embodiments, the proposed system leaves preferably the idle mode of some NFC function enabled, allowing engaging in passive applications like Card Emulation applications, as this has low idle mode power consumption. The ability to engage in active applications like Peer to Peer or Tag Read/Write applications is only enabled based on the detection of user activity patterns through enablement of the disabled idle mode.

Then, an interesting advantage of the system is to keep the principal contributor to idle power consumption disabled until there is likelihood that it will be needed in the very next future. Another interesting advantage from the usability standpoint is that sensor-based detection does not require a direct user action in the NFC device interface system.

This object and other objects may be achieved with a power consumption reduction method in a Near Field Communication device, comprising: having a first Near Field Communication function, of said Near Field Communication device, which idle mode is disabled to reduce power consumption when said Near Field Communication device is on, detecting a likelihood of a future need of activation of said first Near Field Communication function which idle mode is disabled, when said likelihood is detected, automatically enabling said disabled idle mode of said first Near Field Communication function, before actual need of activation of said first Near Field Communication function.

According to embodiments, automatically enabling said disabled idle mode of said first Near Field Communication function is performed without actually activating said first Near Field Communication function.

According to embodiments, in said Near Field Communication device, said power consumption reduction method may of course be applied to one or more of such first Near Field Communication functions which idle mode is disabled to reduce power consumption when said Near Field Communication device is on.

This object and other objects may be also achieved with a Near Field Communication device, comprising: a processor adapted to activate a first Near Field Communication function which idle mode is disabled to reduce power consumption when said Near Field Communication device is on, a detector, integrated in said processor or not, adapted to detect a likelihood of a future need of activation of said first Near Field Communication function which idle mode is disabled, said processor being adapted, upon detection of said likelihood, to automatically enable said disabled idle mode of said first Near Field Communication function, before actual need of activation of said first Near Field Communication function.

Said processor is adapted to automatically enable said disabled idle mode of said first Near Field Communication function, without necessarily activating said first Near Field Communication function at the same time. According to embodiments, said processor is adapted to automatically enable said disabled idle mode of said first Near Field Communication function, without actually activating said first Near Field Communication function.

This object and other objects may be also achieved with a mobile phone comprising a Near Field Communication device according to embodiments.

Preferred embodiments comprise one or more of the following features:
- said likelihood of a future need of activation is a likelihood of a future need of activation by user of said Near Field Communication device.
- said likelihood is detected when an event, which has happened to said Near Field Communication device and which makes likely a future need of activation of said first Near Field Communication function and which is not a reception of a Near Field Communication signal, is detected.
- said event is detected by one or more sensors integrated in said Near Field Communication device.
- said event is detected by several sensors integrated in said Near Field Communication device, several pieces of information respectively coming from said several sensors being taken into account to lower a false alarm rate.
- said one or more sensors include at least an accelerometer and/or a gyroscope and/or an ambient visible light detector.
- said power consumption reduction method also comprises: activating said first Near Field Communication function when actually needed, or disabling enabled idle mode of said first Near Field Communication function, if said first Near Field Communication function is not activated within a predetermined time limit starting from said automatic idle mode enablement of said first Near Field Communication function.
- idle mode of said first Near Field Communication function only regularly consumes power, because said first Near Field Communication function only regularly polls to know if there is a need of activation of said first Near Field Communication function, and disabling said idle mode results in cancelling one or more of said regular polls.
- said power consumption reduction method also comprises having a second Near Field Communication function, of said Near Field Communication device, which idle mode is enabled when said Near Field Communication device is on, idle mode of said second Near Field Communication function being less power consumptive than idle mode of said first Near Field Communication function which idle mode is disabled, preferably at least 20 times less power consumptive, more preferably at least 100 times less power consumptive.
- said second Near Field Communication function belongs to the family of Near Field Communication card emulation functions.
- said first Near Field Communication function belongs to the family of Near Field Communication functions with active production of a magnetic field signal, preferably belongs to the family of Near Field Communication peer to peer functions or to the family of Near Field Communication tag read and write functions.
- said Near Field Communication device also includes at least one telecommunication function, preferably a mobile phone telecommunication function.
- a computer program product comprising a computer readable medium, having thereon a computer program comprising program instructions, the computer program being loadable into a data-processing unit and adapted to cause execution of the method according to embodiments when the computer program is run by the data-processing unit.

Said event is preferably an action, of user of said Near Field Communication device, having a direct impact on Near Field Communication device state, which is not an actual requirement to activate said first Near Field Communication function.

Said predetermined time limit preferably ranges from 5 to 20 seconds, more preferably ranges from 8 to 12 seconds, advantageously is about 10 seconds.

Regularly can either mean from time to time or can preferably mean periodically.

An active Near Field Communication system is preferably a Near Field Communication system that produces a local Near Field Communication magnetic field signal, usually the carrier, which may be modulated with data to be used effectively as a carrier, as described in communication standards, or just used for tag detection purposes, in a proprietary method.

A passive Near Field Communication system is preferably a Near Field Communication system that limits itself to detecting and demodulating an incoming magnetic field carrier signal, for example by the load modulation method as described in communication standards, and does not generate any carrier. No carrier generation is the key element resulting in a lower power consumption.

Further features and advantages of the embodiments will appear from the following description, given as non-limiting examples, with reference to the accompanying drawings listed hereunder.

### BRIEF DESCRIPTION OF THE DRAWINGS

Fig. 1 shows an example of the steps of a power consumption reduction method according to embodiments.
Fig. 2 shows an example of a NFC device implementing the steps of a power consumption reduction method according to embodiments.
Fig. 3 shows an example of a permanent idle mode of an active NFC function according to state of the art.
Fig. 4 shows an example of a temporary idle mode of an active NFC function according to a power consumption reduction method according to embodiments.

### DETAILED DESCRIPTION

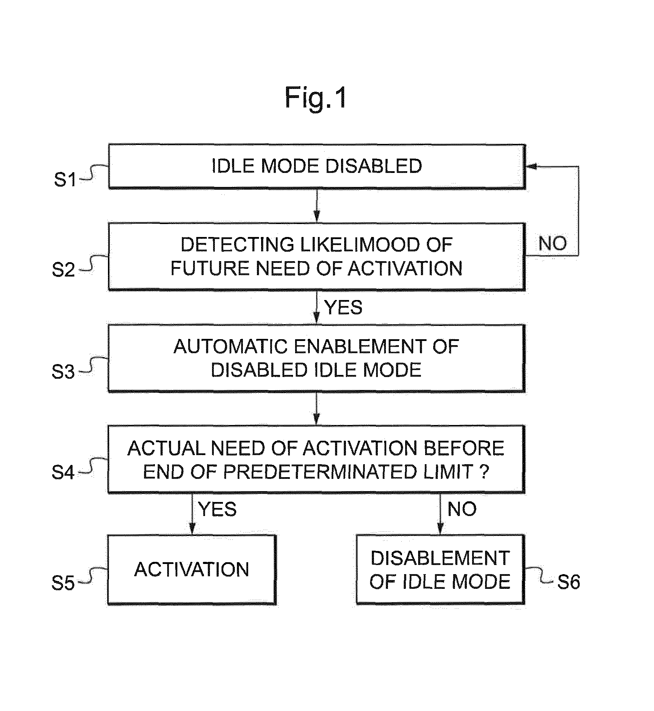

Fig. 1 shows an example of the steps of a power consumption reduction method according to embodiments. This power consumption reduction method in a Near Field Communication device, concerns at least a given NFC function and comprises a step S1 of idle mode disabled for this given NFC function, a step S2 of detection of likelihood of future need of activation of this given NFC function, a step S3 of automatic enablement of the disabled idle mode of this given NFC function, a step S4 of determination or not, of an actual need of activation of this given NFC function, before the end of a predetermined time limit, a step S5 of activation of this given NFC function, a step S6 of disablement of the idle mode of this given NFC function. This given NFC function will be called first NFC function.

In the step S1, there is a first NFC function which idle mode is disabled to reduce power consumption when the Near Field Communication device is on. When the NFC device is set on, either the default mode of this first NFC function is a disabled idle mode which can be an off mode or the default mode of this first NFC function is an enabled idle mode which is afterwards disabled, immediately or after a timer has lapsed.

In the step S2, either a likelihood of a future need of activation of this first NFC function which idle mode is disabled is detected or not. If such a likelihood is detected, then the method goes to next step S3. If there is no detection of such a likelihood, then the method goes back to step S1.

In the step S3, the disabled idle mode of the first NFC function is automatically enabled, and this enablement is performed even before an actual need of activation of this first NFC function appears.

In the step S4, the method determines whether there is an actual need of activation of this first NFC function, before the end of a predetermined time limit, or not. This predetermined time limit preferably ranges from 5 to 20 seconds, more preferably ranges from 8 to 12 seconds, is advantageously about 10 seconds. It means that, as soon as the disabled idle mode of the first NFC function is enabled, which means this first NFC function is no more in an off mode but in an idle mode, a timer is started. If an actual need of activation arises during the predetermined time limit, then the method goes to step S5. If no such actual need of activation arises during the predetermined time limit, then the method goes to step S6 at the end of the predetermined time limit. That way, the enablement of the idle mode only happens when there is a significant likelihood that the first NFC function will be needed in the next future. Even the reduced power consumption of the idle mode is then not wasted, or at least seldom wasted.

In the step S5, the first NFC function is activated and can be immediately used right just after its activation. That way, the activation only happens when actually needed and at the very moment when it is actually needed.

In the step S6, the enabled idle mode of the first NFC function is disabled, if this first NFC function is not activated within a predetermined time limit starting from this automatic idle mode enablement of the first NFC function. That way, the waste of power consumption of the indeed useless idle mode, whereas there was a significant likelihood that the idle mode should be useful, is limited in time, and hence the total wasted power consumption of the idle mode is kept quite low.

The likelihood of a future need of activation is preferably a likelihood of a future need of activation by user of said Near Field Communication device. The method then manages the idle mode state, disabled or enabled, with respect to the likelihood that the user will start using the first NFC function, and not with respect to a likelihood that some external element, external to NFC device and to user, starts a communication with NFC device of the user. The method management is preferably focused on a NFC communication initiated by the user of the NFC device and not by another external device.

The likelihood is preferably detected when an event, which has happened to the NFC device and which makes likely a future need of activation of the first NFC function and which is not a reception of a NFC signal, is detected. Indeed a reception of a NFC signal would mean that there is an actual need of activation of the first NFC function rather than a likelihood of a future need of activation of this first NFC function.

The NFC device preferably has a second NFC function which idle mode is enabled when the NFC device is on, this idle mode of the second NFC function being less power consumptive than the idle mode of the first NFC function which idle mode is disabled, preferably at least 3 times less power consumptive, more preferably at least 20 times less power consumptive, even more preferably at least 100 times less power consumptive. It can be even 500 times less power consumptive. The managing method of the state of the idle mode of the NFC function, which is very efficient but rather sophisticated, is then limited to the NFC functions which idle mode power consumption level is the highest, NFC functions with very low idle mode power consumption level being kept with a permanent idle mode when not activated and when the NFC device is on.

Preferably the second NFC function belongs to the family of Near Field Communication card emulation functions, which is a passive NFC function, whereas the first NFC function belongs to the family of Near Field Communication peer to peer functions or to the family of Near Field Communication read and write functions, which are active NFC functions. Indeed, idle mode power consumption level is much lower for passive NFC functions than for active NFC functions.

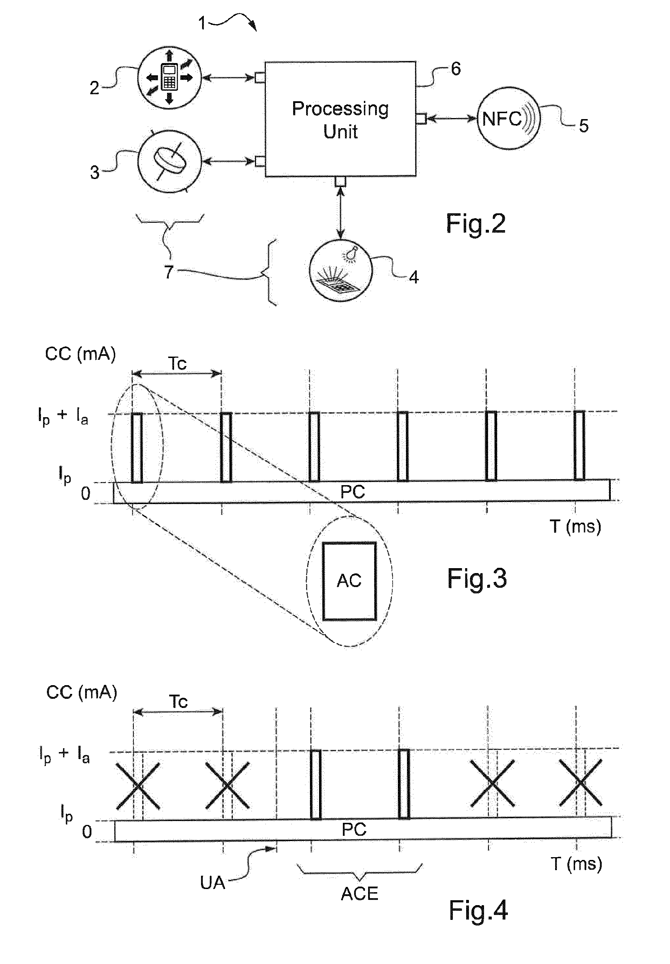

Fig. 2 shows an example of a NFC device implementing the steps of a power consumption reduction method according to embodiments.

The NFC device 1 comprises an antenna 5, a processor 6 and a detector 7 which detector 7 can include one or more of the following sensors: an accelerometer 2, a gyroscope 3, an ambient visible light detector 4. The sensors 2 to 4 can be integrated in the NFC device 1 or in a larger device, like a mobile phone, including the NFC device 1. Those sensors 2 to 4 should be linked to the NFC device 1 to be able to send their information to the NFC device 1. In an option, the detecting function performed by the detector 7 may be partly or fully implemented as part of the processor 6. The NFC device 1 can also include at least one telecommunication function, preferably a mobile phone telecommunication function.

The processor 5 is adapted to activate a first NFC function which idle mode is disabled to reduce power consumption when the NFC device 1 is on. The processor 5 is also adapted, upon detection of a likelihood of a future need of the first NFC function, to automatically enable the disabled idle mode of the first NFC function, before actual need of activation of this first NFC function. A likelihood of a future need of the first NFC function can correspond to a probability of a future need of the first NFC function, within a predetermined time limit, higher than a predetermined threshold. By way of example, more than 25% or more than 50% chances of actual future need within a predetermined time limit of at least 5 seconds, or at least 10 seconds, and for example at most 20 seconds or at most 30 seconds.

The detector 7 is adapted to detect a likelihood of a future need of activation of the first NFC function which idle mode is disabled. To perform this detection, the detector 7 may use the information coming from one or more of the sensors 2 to 4, if present in the NFC device 1. A signal above predetermined threshold coming from accelerometer 2 may result from the user taking the NFC device out of his bag or pocket. A signal above predetermined threshold coming from gyroscope 3 may result from the user taking the NFC device 1 out of his bag or pocket. A signal above predetermined threshold coming from ambient visible light detector 4 may result from the user taking the NFC device 1 out of his bag or pocket. Combining several of those signals should result in distinguishing more efficiently from false alarm situations. For example, using only accelerometer 2 can lead to a false alarm if user starts driving her car, whereas using both accelerometer 2 and gyroscope 3 would help discarding this case. For example, using only accelerometer 2 and gyroscope 3 can lead to a false alarm if user falls down in the stairs, whereas using all three sensors would help discarding this case. For example, using only ambient visible light detector 4 can lead to a situation missed if user takes her NFC device out of her pocket at night, whereas also using an accelerometer 2 and / or a gyroscope 3 would help reacting to take into account this situation.

In a first embodiment, the mobile phone system including the NFC device 1 uses sensors 2 and 3 to determine phone movement, thanks to the accelerator 2, and spatial position, thanks to the gyroscope 3, in order to identify a predefined user's movement patterns that suggest immediate phone usage is to follow, for example like taking the phone out of a pocket or a handbag.

In a second embodiment, the mobile phone system including the NFC device 1 uses ambient light detector 4 to identify situations suggesting that immediate phone usage is to follow, like moving the phone from a dark environment, for example a pocket, handbag or holster, to a brighter environment, for example the daylight.

Fig. 3 shows an example of a permanent idle mode of an active NFC function according to state of the art. The current consumption CC, expressed in milliamperes mA, is plotted versus time T, expressed in milliseconds ms.

A first NFC function, which is an active NFC function, makes an active checking AC in its idle mode by periodically polling. The polling is periodical with a checking period Tc. There is power consumption in idle mode, at each checking period Tc during the active checking AC. This idle mode power consumption corresponds to an active current Ia.

A second NFC function, which is a passive NFC function, makes a passive checking PC in its idle mode permanently. There is power consumption in idle mode all the time because passive checking PC is permanent. This idle mode power consumption corresponds to a passive current Ip.

Figure 3 is not shown with a real relative scale between currents active Ia and passive Ip because active current Ia can be at least several hundreds times higher than passive current Ip. Most of the power consumption in idle mode, indeed often a huge majority, for example more than 90%, is due to the active current Ia.

Fig. 4 shows an example of a temporary idle mode of an active NFC function according to a power consumption reduction method according to embodiments. Like in figure 3, the idle mode of the first NFC function only periodically consumes power, because this first NFC function only periodically polls to know if there is a need of activation of this first Near Field Communication function.

In this case, disabling the idle mode results in cancelling one or more of those regular polls. Those regular polls are cancelled all the time during which there is no detection of a likelihood of a future need of activation of this first NFC function.

In the beginning, there is only the passive checking PC and no active checking AC since the regular, preferably periodic, polls are cancelled, what is shown by a cross on them. There are only two of them on figure 4, for sake of illustration.

At a time, there is a user action UA suggesting that the first NFC function will probably be needed to be activated in the next future. During a predetermined period called active checking enablement ACE, the regular polls are authorized and performed. There are only two of them on figure 4, for sake of illustration.

During active checking enablement ACE, if an actual need of activation of the first NFC function appears, this first NFC function is activated, which situation is not shown on figure 4.

If, on the contrary, during active checking enablement ACE, no actual need of activation of the first NFC function arises, which situation is shown on figure 4, this first NFC function is not activated, and again there is only the passive checking PC and no active checking AC since the regular polls are cancelled like before the user action UA, what is shown by a cross on them. There are only two of them on figure 4, for sake of illustration.

So, when comparing figure 4 to figure 3, it can be seen that the active current Ia has been consumed during a much shorter period of time. Hence, the global idle mode power consumption, whose essential part is due to active current Ia rather than to passive current Ip, is much lower in figure 4 than in figure 3. This idle mode power consumption reduction is a benefit of the method according to embodiments.

The invention has been described with reference to several embodiments. However, many variations are possible within the scope of the invention.

## Claims

1. A power consumption reduction method in a Near Field Communication device, comprising:
- having (S1) a first Near Field Communication function, of said Near Field Communication device, which idle mode is disabled to reduce power consumption when said Near Field Communication device (1) is on,
- detecting (S2) a likelihood of a future need of activation of said first Near Field Communication function which idle mode is disabled,
- when said likelihood is detected, automatically enabling (S3) said disabled idle mode of said first Near Field Communication function, before actual need of activation of said first Near Field Communication function.

2. A power consumption reduction method according to claim 1, wherein:
- said likelihood of a future need of activation is a likelihood of a future need of activation by user of said Near Field Communication device (1).

3. A power consumption reduction method according to any of preceding claims, wherein:
- said likelihood is detected when an event, which has happened to said Near Field Communication device (1) and which makes likely a future need of activation of said first Near Field Communication function and which is not a reception of a Near Field Communication signal, is detected.

4. A power consumption reduction method according to any of claim 3, wherein:
- said event is detected by one or more sensors (2 to 4) integrated in said Near Field Communication device (1).

5. A power consumption reduction method according to claim 4, wherein:
- said event is detected by several sensors (2 to 4) integrated in said Near Field Communication device (1), several pieces of information respectively coming from said several sensors (2 to 4) being taken into account to lower a false alarm rate.

6. A power consumption reduction method according to claims 4 to 5, wherein:
- said one or more sensors (2 to 4) include at least an accelerometer (2) and/or a gyroscope (3) and/or an ambient visible light detector (4).

7. A power consumption reduction method according to any of preceding claims, wherein it also comprises:
- activating (S5) said first Near Field Communication function when actually needed,
- or disabling (S6) enabled idle mode of said first Near Field Communication function, if said first Near Field Communication function is not activated within a predetermined time limit starting from said automatic idle mode enablement of said first Near Field Communication function.

8. A power consumption reduction method according to any of preceding claims, wherein:
- idle mode of said first Near Field Communication function only regularly consumes power, because said first Near Field Communication function only regularly polls (AC) to know if there is a need of activation of said first Near Field Communication function,
- disabling said idle mode results in cancelling one or more of said regular polls (AC).

9. A power consumption reduction method according to any of preceding claims, wherein it also comprises:
- having a second Near Field Communication function, of said Near Field Communication device, which idle mode is enabled when said Near Field Communication device (1) is on, idle mode of said second Near Field Communication function being less power consumptive than idle mode of said first Near Field Communication function which idle mode is disabled, preferably at least 20 times less power consumptive, more preferably at least 100 times less power consumptive.

10. A power consumption reduction method according to claim 9, wherein:
- said second Near Field Communication function belongs to the family of Near Field Communication card emulation functions.

11. A power consumption reduction method according to any of preceding claims, wherein:
- said first Near Field Communication function belongs to the family of Near Field Communication functions with active production of a magnetic field signal, preferably belongs to the family of Near Field Communication peer to peer functions or to the family of Near Field Communication tag read and write functions.

12. A power consumption reduction method according to any of preceding claims, wherein said Near Field Communication device (1) also includes at least one telecommunication function, preferably a mobile phone telecommunication function.

13. A computer program product comprising a computer readable medium, having thereon a computer program comprising program instructions, the computer program being loadable into a data-processing unit and adapted to cause execution of the method according to any of preceding claims when the computer program is run by the data-processing unit.

14. A Near Field Communication device, comprising:
- a processor (6) adapted to activate a first Near Field Communication function which idle mode is disabled to reduce power consumption when said Near Field Communication device (1) is on,
- a detector (7), integrated in said processor (6) or not, adapted to detect a likelihood of a future need of activation of said first Near Field Communication function which idle mode is disabled,
- said processor (6) being adapted, upon detection of said likelihood, to automatically enable said disabled idle mode of said first Near Field Communication function, before actual need of activation of said first Near Field Communication function.

15. A mobile phone comprising a Near Field Communication device (1) according to claim 14.
